# EUROPÄISCHE PATENTSCHRIFT

(11) **EP 0 848 926 B1**
(45) Veröffentlichungstag und Bekanntmachung des Hinweises auf die Patenterteilung: **11.04.2001**
(21) Anmeldenummer: 97122231.0
(22) Anmeldetag: 17.12.1997
(51) Int. Cl.: A47L 9/24, A47L 9/28

(54) **Teleskopierbares Staubsauger-Saugrohr mit einem darin angeordneten, elektrisch leitenden Kabel**
Telescopic dust suction tube for a vacuum cleaner incorporating an electrically conducting cable
Tuyau téléscopique d'aspirateur comprenant un câble électrique

(30) Priorität: 18.12.1996 DE 19652647
(43) Veröffentlichungstag der Anmeldung: 24.06.1998
(73) Patentinhaber: Fischer-Rohrtechnik GmbH, 77855 Achern-Fautenbach (DE); Miele & Cie. GmbH & Co., D-33332 Gütersloh (DE)
(72) Erfinder: Cordes, August, 59846 Sundern (DE); Brinkhoff, Helmut, 33824 Werther (DE); Gloning, Gunter, 33607 Bielefeld (DE); Hettenhausen, Ulrich, 33739 Bielefeld (DE)
(74) Vertreter: Eichelbaum, Lambert, Dipl.-Ing.

(56) Entgegenhaltungen:
- EP-A- 0 738 492
- DE-A- 1 921 410
- DE-A- 4 402 835
- DE-A- 4 404 394
- PATENT ABSTRACTS OF JAPAN vol. 016, no. 509 (C-0997), 21.Oktober 1992 & JP 04 189337 A (MATSUSHITA ELECTRIC IND CO LTD), 7.Juli 1992,

## Beschreibung

Die Erfindung betrifft ein teleskopierbares Staubsauger-Saugrohr mit einem Außenrohr und einem Innenrohr zur Luftführung und einem am Außenrohr angeordneten Kabelkanal-Außenrohr und einem darin teleskopierend eingreifenden, am Innenrohr angeordneten Kabelkanal-Innenrohr, in welchen ein elektrisch leitendes Kabel angeordnet ist, sowie mit einer die Teleskopbewegung von Innenrohr und Außenrohr wahlweise sperrenden oder lösenden Verriegelungseinrichtung.

Ein teleskopierbares Staubsauger-Saugrohr dieser Art ist in der DE-A-19 21 410 in den Figuren 10 bis 14 sowie in dem darauf Bezug nehmenden Beschreibungstext auf Seite 12, letzter Absatz, bis Seite 14 offenbart. Dabei ist an der Außenumfangsfläche des offenkundig metallischen Außenrohres durch Schweißen ein Kabelkanal-Außenrohr und am Innenrohr über einen Befestigungsring ein Kabelkanal-Innenrohr angeordnet. In den Kabelkanalrohren befinden sich elektrische Leiterbahnen, die miteinander in Schleifkontakt stehen. Die Außenumfangsfläche des Innenrohres weist Rastvertiefungen auf, die mit der im Außenrohr angeordneten Verriegelungseinrichtung Zusammenwirken. Diese Ausführungsform ist mit dem Nachteil behaftet, daß die aufgrund ihrer Teleskopzuordnung zwangsläufig mit einem Gleitspiel behafteten Kabelkanalrohre an der Außenumfangsfläche ungeschützt einem Eindringen von Stäuben und Feuchtigkeit ausgesetzt sind, wodurch sich der elektrische Widerstand der in Schleifkontakt stehenden Kabel verändern und bei eindringender Feuchtigkeit auch durch Kriechströme ein Kurzschluß mit den für die Gesundheit der Bedienungsperson gefährlichen Folgen auftreten kann. Darüber kann auch nicht hinwegtäuschen, daß die Luftführung ausschließlich im Innenrohr und Außenrohr erfolgt und sich die Kabelkanäle außerhalb dieser Luftführung befinden.

Dies haben offenbar die Erfinder der gattungsfremden DE-A-44 04 394 erkannt und mit der Ausführungsform in Fig. 2 ein teleskopierbares Staubsauger-Saugrohr anderer Gattung vorgeschlagen, bei welchem das Kabelkanal-Außenrohr im Innenrohr und das Kabelkanal-Innenrohr im Außenrohr befestigt ist. Eine für die gewerbliche Verwendung derartiger teleskopierbarer Staubsauger-Saugrohre unerläßliche Verriegelungseinrichtung ist nicht offenbart. Diese Ausführungsform weist den Nachteil auf, daß sich die im Luftführungskanal des Innenrohres und Außenrohres befindenden Kabelkanalrohre aufgrund der zwischen ihnen unerläßlichen Gleitpassung den Wirkungen des Luftstromes ausgesetzt sind, aus welchem friktionserhöhende Staubpartikel und Feuchtigkeit in die Kabelkanalrohre eindringen können. Diese Staubpartikel führen je nach Beanspruchung zu erhöhten Wandreibungen der Kabelwendel mit den Innenwandungen der Kabelkanalrohre und damit zu einem Aufreiben der elektrischen Isolation. Da die Kabelkanal-Außenrohre und Innenrohre dieser Art in der Regel aus Metall bestehen, führt der geringste Leiterkontakt zu einer Überleitung des Stromes in das Außenrohr und damit zu der Bedienungsperson.

In der DE-A-44 02 835 ist ein weiteres, gattungsfremdes teleskopierbares Staubsauger-Saugrohr offenbart, bei welchem in einem zwischen dem Innenrohr und dem Außenrohr erweiterten Hohlraum eine elektrische Wendelleitung vorgesehen ist. Die Außenfläche des Innenrohres und dieser Hohlraum werden durch zwei die Friktion entsprechend erhöhende Dichtringe abgedichtet. Dieser Hohlraum verleiht der Querschnittskonfiguration des Staubsauger-Saugrohres eine ungünstige ergonomische Form. Die unmittelbar im Hohlraum des Außenrohres angeordnete Wendel ist durch den Reibkontakt entsprechenden Aufreibungen beim Teleskopieren ausgesetzt.

Aus der DE-A-39 14 840 ist ein teleskopierbarer Führungsstiel für Haushaltsstaubsauger bekanntgeworden, der jedoch keine Luftleitfunktion erfüllt. In diesem Führungsstiel sind zwei Stielteile miteinander teleskopierbar angeordnet. In einem Stielteil mit einer metallischen Umhüllung gleitet ein weiteres, sich aus zwei Kunststoffhalbschalen zusammensetzendes Stielteil. Diese Kunststoffhalbschalen bilden zugleich ein Isolationsmaterial für einen rohrförmigen Kabelraum zur Aufnahme einer Kabelwendel. Das bei gattungsgemäßen Teleskop-Staubsauger-Saugrohren erstrebte Ziel und die damit zusammenhängende Problematik der Trennung des Luftführungskanals vom Kabelkanal ist hier nicht gegeben.

Von diesem Stand der Technik ausgehend, liegt der Erfindung die Aufgabe zugrunde, ein teleskopierbares Staubsauger-Saugrohr der eingangs genannten Gattung zu schaffen, welches die Kabelkanalrohre gegen das Eindringen von Stäuben und Feuchtigkeit weitgehend abdichtet und gleichwohl eine ergonomisch günstige und optisch ansprechende Form aufweist.

Diese Aufgabe wird in Verbindung mit dem eingangs genannten Gattungsbegriff erfindungsgemäß durch folgende Merkmale gelöst:
a) das Innenrohr ist vollständig und das Außenrohr teilweise von einem zweiten, die Verriegelungseinrichtung und das Innenrohr tragenden Außenrohr umgeben, und
b) die teleskopierenden Kabelkanalrohre sind zwar in an sich bekannter Weise außerhalb des Luftdurchströmquerschnittes des Innenrohres, jedoch innerhalb beider Außenrohre angeordnet.

Durch diese Merkmale werden sowohl das Kabelkanal-Innenrohr als auch das Kabelkanal-Außenrohr schützend von einem zweiten Außenrohr umgriffen und sind weitgehend hermetisch abgedichtet zwischen dem Innenrohr und den beiden Außenrohren angeordnet. Da das Kabelkanal-Außenrohr nunmehr mit dem Innenrohr kontaktiert, wird die Gleitfläche zwischen dem Kabelkanal-Außenrohr und dem Kabelkanal-Innenrohr gegenüber den strömungsführenden Kanälen weitgehend abgedichtet. Aufgrund der kompletten Einbindung des Innenrohres und der beiden Kabelkanalrohre in die beiden Außenrohre wird nicht nur eine ergonomisch günstige sowie einheitliche Querschnittsform, sondern auch eine optisch ansprechende Ausbildung sichergestellt.

Nach einer vorteilhaften Weiterbildung der Erfindung weist das Innenrohr eine ovale Querschnittsform auf, die an ihrem, den Kabelkanalrohren zugewandten Bereich konkav eingewölbt ist und mit diesem eingewölbten Querschnittsbereich das Kabelkanal-Außenrohr teilweise umgreift. Dadurch ist es möglich, dem Staubsauger-Saugrohr insgesamt eine ovale Form zu verleihen, die nicht nur ergonomisch günstig, sondern auch optisch ansprechend in Erscheinung tritt.

Um das Kabel in einem Kabelkanal mit möglichst gleichbleibendem Querschnitt aufnehmen zu können, sind das Kabelkanal-Außenrohr und das Kabelkanal-Innenrohr mit einem Kreisringquerschnitt versehen. Das Kabelkanal-Außenrohr ist ferner an seiner Außenumfangsfläche mit zwei diametral gegenüberliegenden sowie parallel zu seiner Symmetrielängsachse verlaufenden Leisten versehen, die sich an zwei Gleitflächen an den Enden des konkav gewölbten Querschnittsbereiches des Innenrohres anlegen und mit diesen ein Gleitlager bilden. Durch diese Gleitflächen kann das Außenrohr reibungsarm in dem konkav gewölbten Querschnittsbereich des Innenrohres beim Teleskopvorgang gleiten.

Zur Vermeidung von Einfallerscheinungen sowie zur Erzielung einer biegesteifen Form ist das Kabelkanal-Außenrohr mit weiteren, zu seiner Symmetrielängsachse parallel verlaufenden Versteifungsleisten versehen. Das Kabelkanal-Innenrohr ist mit einer leicht gängigen Gleitpassung im Kabelkanal-Außenrohr geführt.

Nach einer vorteilhaften Weiterbildung der Erfindung sind das Innenrohr und das Kabelkanal-Innenrohr am Ende des zweiten Außenrohres über ein erstes Verbindungselement sowohl drehfest als auch relativ unbeweglich mit diesem verbunden, wobei am Außenumfang dieses ersten Verbindungselementes ein Steckanschluß für das elektrisch leitende Kabel vorgesehen ist.

Ebenso ist das erste Außenrohr an seinem Ende über ein zweites Verbindungselement mit dem Kabelkanal-Außenrohr drehfest sowie relativ unbeweglich zueinander miteinander verbunden. Am Außenumfang dieses zweiten Verbindungselementes ist gleichfalls ein Steckanschluß für das elektrisch leitende Kabel vorgesehen.

Sowohl zur effektiven elektrischen Isolation als auch zur Sicherstellung eines äußerst reibungsarmen Ineinandergleitens während des Teleskopiervorganges bestehen das Innenrohr, die beiden Kabelkanalrohre und die Verbindungselemente aus Kunststoff, hingegen das erste und das zweite Außenrohr aus Metall.

Auf der Außenumfangsfläche des ersten Außenrohres sind Rastvertiefungen für die im zweiten Außenrohr angeordnete Verriegelungseinrichtung vorgesehen. Diese Art der Anordnung ist zwar grundsätzlich aus vielfältigen Ausführungsformen bekannt, jedoch nicht in Verbindung mit einem zweiten Außenrohr.

Zur Sicherstellung einer reibungsarmen Teleskopierbewegung sind am freien Ende des ersten Außenrohres an seiner Außenumfangsfläche ein Dichtring aus Kunststoff und am freien Ende des zweiten Außenrohres an seiner Innenumfangsfläche gleichfalls ein Dichtring aus Kunststoff angeordnet, die zwischen der Außenumfangsfläche des ersten Außenrohres und der Innenumfangsfläche des zweiten Außenrohres Gleitlager und Distanzhalter bilden.

Nach einer besonders vorteilhaften Weiterbildung der Erfindung sind die Querschnittsformen der beiden Außenrohre sowie teilweise des Innenrohres in Verbindung mit dem Kabelkanal-Außenrohr geometrisch ähnlich. Dabei kommt die geometrische Ähnlichkeit des Innenrohres mit den beiden Außenrohren durch entsprechende Umgreifung des Kabelkanal-Außenrohres zustande.

Ein Ausführungsbeispiel der Erfindung ist in den Zeichnungen dargestellt. Dabei zeigen:
Fig. 1 einen diametralen Längsschnitt durch das teleskopierbare Staubsauger-Saugrohr,
Fig. 2 eine gegenüber Fig. 1 erheblich vergrößerte Schnittansicht entlang der Linie II-II von Fig. 1,
Fig. 3 die gegenüber Fig. 1 vergrößerte Querschnittsansicht des Innenrohres,
Fig. 4 die Querschnittsansicht des Kabelkanal-Außenrohres und
Fig. 5 die Querschnittsansicht des Kabelkanal-Innenrohres.

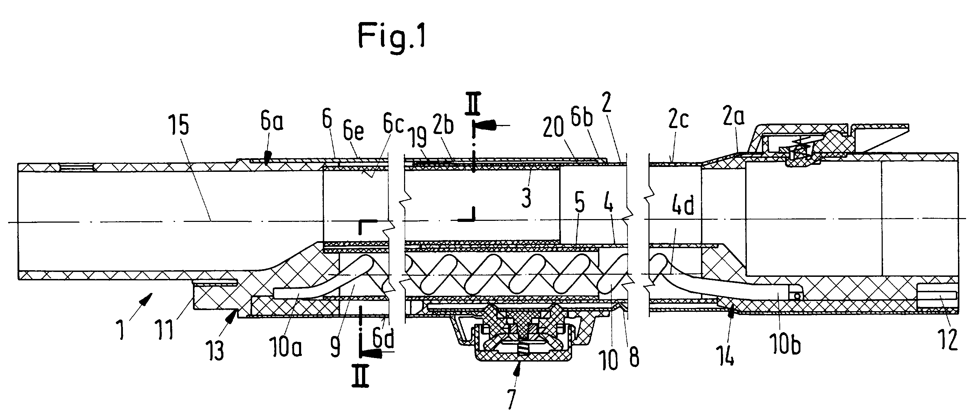

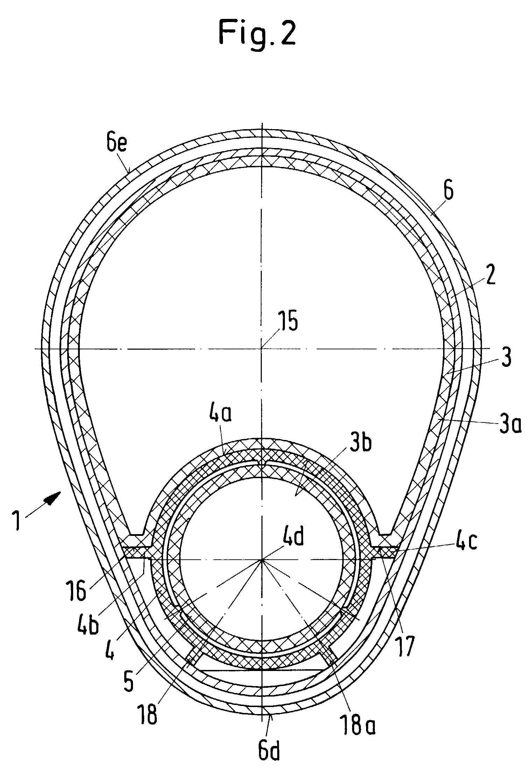

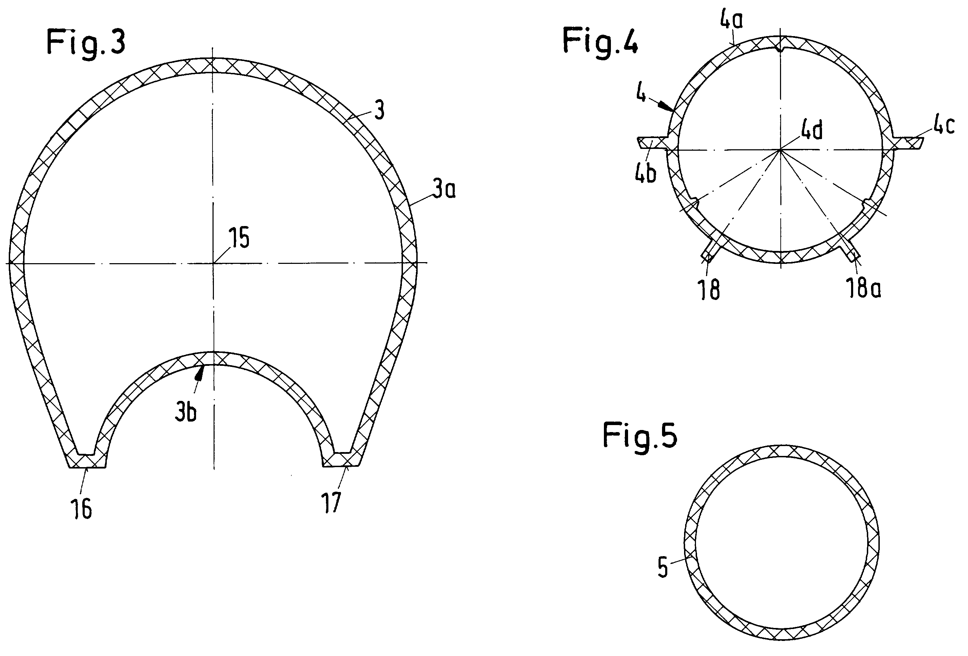

Gemäß den Figuren 1 und 2 besteht das teleskopierbare Staubsauger-Saugrohr 1 aus einem ersten, metallischen Außenrohr 2, einem darin teleskopierend eingreifenden, aus Kunststoff bestehenden sowie besonders konfigurierten Innenrohr 3. Die besondere Querschnittskonfiguration des Innenrohres 3 besteht gemäß Fig. 3 aus einer ovalen Querschnittsform 3a, die an ihrem, den aus Kunststoff bestehenden Kabelkanalrohren zugewandten Bereich 3b konkav eingewölbt ist und mit diesem eingewölbten Querschnittsbereich 3b das Kabelkanal-Außenrohr 4 gemäß Fig. 2 teilweise umgreift, so daß die gemeinsame Querschnittsform von Innenrohr 3 und Kabelkanal-Außenrohr 4 etwa gleichmäßig oval verläuft. In das Kabelkanal-Außenrohr 4 greift das Kabelkanal-Innenrohr 5 mit seinem Kreisringquerschnitt teleskopierend sowie reibungsarm gleitend ein.

Das erste Außenrohr 2 und das Innenrohr 3 werden von einem zweiten, metallischen Außenrohr 6 gemeinsam umgriffen. Dabei wird das Innenrohr 3 vom zweiten Außenrohr 6 vollständig, hingegen das erste Außenrohr 2 nur teilweise übergriffen. In diesem zweiten Außenrohr 6 ist gemäß Fig. 1 eine die Teleskopbewegung von Innenrohr 3 zum ersten und zweiten Außenrohr 2, 6 wahlweise sperrende oder lösende Verriegelungseinrichtung 7 angeordnet, die mit im ersten Außenrohr 2 angeordneten Rastvertiefungen 8 zusammenwirkt.

Gemäß Fig. 1 ist in dem vom Kabelkanal-Außenrohr 4 und dem Kabelkanal-Innenrohr 5 gebildeten Kabelkanal 9 ein aus einer Kabelwendel 10 bestehendes Kabel angeordnet. Diese Kabelwendel 10 ist an ihren beiden Enden 10a, 10b mit je einem elektrischen Steckanschluß 11, 12 verbunden.

Der erste Steckanschluß 11 befindet sich am Ende 6a des zweiten Außenrohres 6 in einem ersten Verbindungselement 13 aus Kunststoff, das sowohl das Innenrohr 3 als auch das Kabelkanal-Innenrohr 5 sowie das zweite Außenrohr 6 drehfest und relativ unbeweglich zueinander verbindet.

Der zweite Steckanschluß 12 ist in einem zweiten Verbindungselement 14 angeordnet, welches das erste Außenrohr 2 mit dem Kabelkanal-Außenrohr 4 drehfest sowie relativ unbeweglich zueinander verbindet. Da die Querschnittsformen des ersten Außenrohres 2 und des zweiten Außenrohres 6 sowie des Innenrohres 3 in Verbindung mit dem Kabelkanal-Außenrohr 4 oval sowie weitgehend geometrisch ähnlich sind, können die vorbeschriebenen Teile aufgrund ihrer ovalen Form gleichfalls nicht zueinander verdreht werden. Zudem entsteht eine ergonomisch günstige sowie optisch ansprechende Form des gesamten Staubsauger-Saugrohres 1.

Wie am anschaulichsten aus den Figuren 2 bis 4 entnommen werden kann, ist das Kabelkanal-Außenrohr 4 an seiner Außenumfangsfläche 4a mit zwei diametral gegenüberliegenden sowie parallel zu seiner Symmetrielängsachse 4d verlaufenden Leisten 4b, 4c versehen, die sich an zwei Gleitflächen 16, 17 an den Enden des konkav gewölbten Querschnittsbereiches 3b des Innenrohres 3 anlegen und mit diesem ein Gleitlager 4b, 4c; 16, 17 bilden.

Die Symmetrielängsachse der beiden Außenrohre 2, 6 und des Innenrohres 3 ist mit 15 bezeichnet und zugleich gemäß Fig. 2 Radiusmittelpunkt der Halbkreisformen der Außenrohre 2, 6 und des Innenrohres 3 im breiten Querschnittsbereich 6e. Demgegenüber bildet gemäß Fig. 2 die Symmetrielängsachse 4d den Radiusmittelpunkt für die Kabelkanalrohre 4, 5 und die beiden Außenrohre 2, 6 im schmalen Querschnittsbereich 6d.

Das Kabelkanal-Außenrohr 4 ist mit zwei weiteren, zu seiner Symmetrielängsachse 4d parallel verlaufenden Versteifungsleisten 18, 18a versehen, wodurch das Kabelkanal-Außenrohr 4 eine äußerst biegesteife, geradlinig verlaufende und damit einen friktionsarmen Teleskopvorgang sicherstellende Form erhält. Das Kabelkanal-Innenrohr 5 wird in dem Kabelkanal-Außenrohr 4 mit einer leicht gängigen Gleitpassung geführt.

Am freien Ende 2b des ersten Außenrohres 2 ist gemäß Fig. 1 an seiner Außenumfangsfläche 2c ein Dichtring 19 aus Kunststoff und am freien Ende 6b des zweiten Außenrohres 6 an seiner Innenumfangsfläche 6c gleichfalls ein Dichtring 20 aus Kunststoff angeordnet. Diese beiden Dichtringe 19, 20 bilden zwischen der Außenumfangsfläche 2c des ersten Außenrohres 2 und der Innenumfangsfläche 6c des zweiten Außenrohres 6 sowohl ein reibungsarmes Gleitlager als auch einen Distanzhalter.

Die Querschnittsformen der beiden Außenrohre 2, 6 sowie teilweise des Innenrohres 3 in Verbindung mit dem Kabelkanal-Außenrohr 4 sind geometrisch ähnlich, das heißt, daß die Außenumfangslinien die gleiche geometrische Form aufweisen und zueinander parallel verlaufen.

Dieses teleskopierbare Staubsauger-Saugrohr 1 weist gegenüber dem gesamten Stand der Technik den unvergleichlichen Vorteil eines gegenüber dem Luftführungskanal, der überwiegend vom Innenraum des Innenrohres 3 und teilweise vom Innenraum des ersten Außenrohres 2 gebildet wird, vollständig durch das zweite Außenrohr 6 von der Außenatmosphäre getrennten Kabelkanales 9 auf. Ferner ist der von den beiden aus Kunststoff bestehenden Kabelkanalrohren 4, 5 gebildete Kabelkanal 9 auch hermetisch vom Luftführungskanal der beiden Außenrohre 2, 6 getrennt. Eine zusätzliche Verdrehsicherung zwischen den Rohren 2, 3, 6 ist aufgrund ihrer ovalen Form nicht erforderlich.

Außerdem ist diese spezielle ovale Querschnittsform mit einem breiteren und einem schmaleren Querschnittsbereich dadurch ergonomisch günstig zu handhaben, daß die Verriegelungseinrichtung 7 auf dem schmaleren ovalen Querschnittsbereich 6d des zweiten Außenrohres 6 angeordnet ist und der breitere Querschnittsbereich 6e sich dem Fingergelenkbereich mit den beiden Fingerballen in ergonomisch günstiger Weise angenehm anschmiegt. Dadurch kann die Bedienungsperson mit dem Daumen der Bedienungshand die Verriegelungseinrichtung 7 betätigen und mit den vier Fingern der Bedienungshand den breiteren Querschnittsbereich 6e des Außenrohres 6 untergreifen.

### Bezugszeichenliste:

- Staubsauger-Saugrohr: 1
- erstes Außenrohr: 2
- Enden des ersten Außenrohres 2: 2a, 2b
- Außenumfangsfläche des ersten Außenrohres 2: 2c
- Innenrohr: 3
- Querschnittsform des Innenrohres 3: 3a
- eingewölbter Querschnittsbereich des Innenrohres 3: 3b
- Kabelkanal-Außenrohr: 4
- Außenumfangsfläche des Kabelkanal-Außenrohres 4: 4a
- Leisten des Kabelkanal-Außenrohres 4: 4b, 4c; 18, 18a
- Symmetrielängsachse des Kabelkanal-Außenrohres 4: 4d
- Kabelkanal-Innenrohr: 5
- zweites Außenrohr: 6
- Enden des zweiten Außenrohres 6: 6a, 6b
- Innenumfangsfläche des zweiten Auβenrohres 6: 6c
- schmaler Querschnittsbereich des zweiten Außenrohres 6: 6d
- breiter Querschnittsbereich des zweiten Außenrohres 6: 6e
- Verriegelungseinrichtung: 7
- Rastvertiefungen: 8
- Kabelkanal: 9
- Kabelwendel: 10
- Enden der Kabelwendel 10: 10a, 10b
- Steckanschlüsse: 11, 12
- Verbindungselemente: 13, 14
- Symmetrielängsachse der Außenrohre 2, 6 und des Innenrohres 3: 15
- Gleitlager: 16, 17
- Dichtringe: 19, 20

## Patentansprüche

1. Teleskopierbares Staubsauger-Saugrohr mit einem Außenrohr und einem Innenrohr zur Luftführung und einem am Außenrohr angeordneten Kabelkanal-Außenrohr und einem darin teleskopierend eingreifenden, am Innenrohr angeordneten Kabelkanal-Innenrohr, in welchen ein elektrisch leitendes Kabel angeordnet ist, sowie mit einer die Teleskopbewegung von Innenrohr und Außenrohr wahlweise sperrenden oder lösenden Verriegelungseinrichtung, **gekennzeichnet durch** folgende Merkmale:
a) Das Innenrohr (3) ist vollständig und das Außenrohr (2) teilweise von einem zweiten, die Verriegelungseinrichtung (7, 8) und das Innenrohr (3) tragenden Außenrohr (6) umgeben und
b) die teleskopierenden Kabelkanalrohre (5, 4) sind zwar in an sich bekannter Weise außerhalb des Luftdurchströmquerschnittes des Innenrohres (3), jedoch innerhalb beider Außenrohre (2, 6) angeordnet.

2. Teleskopierbares Staubsauger-Saugrohr nach Anspruch 1, **dadurch gekennzeichnet**, daß das Innenrohr (3) eine ovale Querschnittsform aufweist, die an ihrem, den Kabelkanalrohren (4, 5) zugewandten Bereich (3b) konkav eingewölbt ist und mit diesem eingewölbten Querschnittsbereich (3b) das Kabelkanal-Außenrohr (4) teilweise umgreift.

3. Teleskopierbares Staubsauger-Saugrohr nach den Ansprüchen 1 und 2, **dadurch gekennzeichnet**, daß das Kabelkanal-Außenrohr (4) und das Kabelkanal-Innenrohr (5) mit einem Kreisringquerschnitt versehen sind.

4. Teleskopierbares Staubsauger-Saugrohr nach einem oder mehreren der Ansprüche 1 bis 3, **dadurch gekennzeichnet**, daß das Kabelkanal-Außenrohr (4) an seiner Außenumfangsfläche (4a) mit zwei diametral gegenüberliegenden sowie parallel zu seiner Symmetrielängsachse (4d) verlaufenden Leisten (4b, 4c) versehen ist, die sich an zwei Gleitflächen (16, 17) an den Enden des konkav gewölbten Querschnittsbereiches (3b) des Innenrohres (3) anlegen und mit diesen ein Gleitlager (4b, 4c; 16, 17) bilden.

5. Teleskopierbares Staubsauger-Saugrohr nach einem oder mehreren der Ansprüche 1 bis 4, **dadurch gekennzeichnet,** daß das Kabelkanal-Außenrohr (4) mit weiteren, zu seiner Symmetrielängsachse (4d) parallel verlaufenden Versteifungsleisten (18, 18a) versehen ist.

6. Teleskopierbares Staubsauger-Saugrohr nach einem oder mehreren der Ansprüche 1 bis 5, **dadurch gekennzeichnet,** daß das Kabelkanal-Innenrohr (5) mit einer leicht gängigen Gleitpassung im Kabelkanal-Außenrohr (4) geführt ist.

7. Teleskopierbares Staubsauger-Saugrohr nach einem oder mehreren der Ansprüche 1 bis 6, **dadurch gekennzeichnet,** daß das Innenrohr (3) und das Kabelkanal-Innenrohr (5) am Ende (6a) des zweiten Außenrohres (6) über ein erstes Verbindungselement (13) sowohl drehfest als auch relativ unbeweglich mit diesem (6) verbunden sind.

8. Teleskopierbares Staubsauger-Saugrohr nach einem oder mehreren der Ansprüche 1 bis 7, **dadurch gekennzeichnet,** daß am ersten Verbindungselement (13) ein Steckanschluß (11) für das elektrisch leitende Kabel (10) vorgesehen ist.

9. Teleskopierbares Staubsauger-Saugrohr nach einem oder mehreren der Ansprüche 1 bis 8, **dadurch gekennzeichnet,** daß das erste Außenrohr (2) an seinem Ende (2a) über ein zweites Verbindungselement (14) mit dem Kabelkanal-Außenrohr (4) drehfest sowie relativ unbeweglich zueinander miteinander verbunden ist.

10. Teleskopierbares Staubsauger-Saugrohr nach einem oder mehreren der Ansprüche 1 bis 9, **dadurch gekennzeichnet,** daß am zweiten Verbindungselement (14) ein Steckanschluß (12) für das elektrisch leitende Kabel (10) vorgesehen ist.

11. Teleskopierbares Staubsauger-Saugrohr nach einem oder mehreren der Ansprüche 1 bis 10, **dadurch gekennzeichnet,** daß das Innenrohr (3), die beiden Kabelkanalrohre (4, 5) und die Verbindungselemente (13, 14) aus Kunststoff, hingegen das erste und zweite Außenrohr (2, 6) aus Metall bestehen.

12. Teleskopierbares Staubsauger-Saugrohr nach einem oder mehreren der Ansprüche 1 bis 11, **dadurch gekennzeichnet,** daß auf der Außenumfangsfläche des ersten Außenrohres (2) Rastvertiefungen (8) für die im zweiten Außenrohr (6) angeordnete Verriegelungseinrichtung (7) angeordnet sind.

13. Teleskopierbares Staubsauger-Saugrohr nach einem oder mehreren der Ansprüche 1 bis 12, **dadurch gekennzeichnet,** daß am freien Ende (2b) des ersten Außenrohres (2) an seiner Außenumfangsfläche (2c) ein Dichtring (19) aus Kunststoff und am freien Ende (6b) des zweiten Außenrohres (6) an seiner Innenumfangsfläche (6c) gleichfalls ein Dichtring (20) aus Kunststoff angeordnet sind, die zwischen der Außenumfangsfläche (2c) des ersten Außenrohres (2) und der Innenumfangsfläche (6c) des zweiten Außenrohres (6) Gleitlager und Distanzhalter bilden.

14. Teleskopierbares Staubsauger-Saugrohr nach einem oder mehreren der Ansprüche 1 bis 13, **dadurch gekennzeichnet,** daß zwischen den beiden Anschlüssen (11, 12) der Verbindungselemente (13, 14) in dem Kabelkanal-Innenrohr (5) und in dem damit teleskopierbaren Kabelkanal-Außenrohr (4) als Kabel eine expandierbare Kabelwendel (10) angeordnet ist.

15. Teleskopierbares Staubsauger-Saugrohr nach einem oder mehreren der Ansprüche 1 bis 14, **dadurch gekennzeichnet,** daß die Querschnittsformen der beiden Außenrohre (2, 6) sowie teilweise des Innenrohres (3) in Verbindung mit dem Kabelkanal-Außenrohr (4) geometrisch ähnlich sind.

## Claims

1. A telescopic vacuum cleaner suction tube with an outer tube and an inner tube for the passage of air and a cable duct outer tube arranged at the outer tube and a cable duct inner tube engaging telescopically therein arranged at the inner tube, in which an electrically conductive cable is arranged, as well as with a locking device which optionally locks or releases the telescopic movement of the inner tube and outer tube, characterised by the following features:
a) the inner tube (3) is completely encompassed, and the outer tube (2) partially encompassed, by a second outer tube, the locking device (7, 8), and the outer tube (6) carrying the inner tube (3), and
b) the telescopic cable duct tubes (5, 4) are indeed arranged in a known manner outside the air throughflow cross-section of the inner tube (3), but arranged inside both outer tubes (2, 6).

2. The telescopic vacuum cleaner suction tube according to Claim 1, characterised in that the inner tube (3) features an oval cross-sectional form, which is concave cambered at its area (3b) turned towards the cable duct tubes (4, 5), and with this inwardly-cambered cross-sectional area (3b) partially encompasses the cable duct outer tube (4).

3. The telescopic vacuum cleaner suction tube according to Claims 1 and 2, characterised in that the cable duct outer tube (4) and the cable duct inner tube (5) are provided with a circular annular cross-section.

4. The telescopic vacuum cleaner suction tube according to Claims 1 to 3, characterised in that the cable duct outer tube (4) is provided at its outer circumferential surface (4a) with two diametrically opposed strips (4b, 4c) running parallel to the longitudinal axis of symmetry (4d), said strips being in contact with two sliding surfaces (16, 17) at the ends of the concave cambered cross-sectional area (3b) of the inner tube (3), and form with this a sliding bearing (4b, 4c; 16, 17).

5. The telescopic vacuum cleaner suction tube according to Claims 1 to 4, characterised in that the cable duct outer tube (4) is provided with additional bracing strips (18, 18a) running parallel to the longitudinal axis of symmetry (4d).

6. The telescopic vacuum cleaner suction tube according to Claims 1 to 5, characterised in that the cable duct inner tube (5) is guided in the cable duct outer tube (4) with an easily-moving slide fit.

7. The telescopic vacuum cleaner suction tube according to Claims 1 to 6, characterised in that the inner tube (3) and the cable duct inner tube (5) are connected at the end (6a) of the second outer tube (6) by means of a first connecting element (13) both rotationally-resistant as well as immovable in relation to said second outer tube (6).

8. The telescopic vacuum cleaner suction tube according to Claims 1 to 7, characterised in that a plug connection (11) for the electrically conductive cable (10) is provided at the first connecting element (13).

9. The telescopic vacuum cleaner suction tube according to Claims 1 to 8, characterised in that the first outer tube (2) is connected at its end (2a) by means of a second connecting element (14) to the cable duct outer tube (4) in a rotationally-resistant manner as well as relatively immovably in relation to one another.

10. The telescopic vacuum cleaner suction tube according to Claims 1 to 9, characterised in that a plug connection (12) for the electrically conductive cable (10) is provided at the second connecting element (14).

11. The telescopic vacuum cleaner suction tube according to Claims 1 to 10, characterised in that the inner tube (3), the two cable duct tubes (4, 5) and the connecting elements (13, 14) are made of plastic, while the first and the second outer tube (2, 6) are made of metal.

12. The telescopic vacuum cleaner suction tube according to Claims 1 to 11, characterised in that engagement indentations (8) for the locking device (7) arranged in the second outer tube (6) are arranged on the outer circumferential surface of the first outer tube (2).

13. The telescopic vacuum cleaner suction tube according to Claims 1 to 12, characterised in that at the free end (2b) of the first outer tube (2), on its outer circumferential surface (2c), a sealing ring (19) made of plastic is arranged, and at the free end (6b) of the second outer tube (6) at its inner circumferential surface (6c) likewise a sealing ring (20) made of plastic is arranged, which form a slide bearing and spacer element between the outer circumferential surface (2c) of the first outer tube (2) and the inner circumferential surface (6c) of the second outer tube (6).

14. The telescopic vacuum cleaner suction tube according to Claims 1 to 13, characterised in that an expandable cable coil (10) is arranged as a cable between the two connections (11, 12) of the connecting elements (13, 14) in the cable duct inner tube (5) and in the cable duct outer tube (4) telescopcable therewith.

15. The telescopic vacuum cleaner suction tube according to Claims 1 to 14, characterised in that the cross-sectional shapes of the two outer tubes (2, 6) and partially of the inner tube (3) in connection with the cable duct outer tube (4) are geometrically similar.

## Revendications

1. Tube d'aspiration télescopique pour aspirateur, comprenant un tube extérieur et un tube intérieur pour l'adduction d'air et un tube d'extérieur de canalisation de câble prévu au niveau du tube extérieur et un tube intérieur de canalisation de câble s'engageant télescopiquement dans celui-ci et prévu au niveau du tube intérieur, dans lequel est mis en place un câble conducteur d'électricité, ainsi qu'un dispositif de verrouillage barrant ou libérant optionnellement le mouvement télescopique du tube intérieur et du tube extérieur, caractérisé par les caractéristiques suivantes:
a) le tube intérieur (3) est entièrement enveloppé et le tube extérieur (2) partiellement enveloppé par un second tube extérieur (6) portant le dispositif de verrouillage (7, 8) et le tube intérieur (3), et
b) les tubes de canalisation de câble télescopiques (5, 4) sont placés de la manière connue à l'extérieur de la section transversale d'écoulement d'air du tube intérieur (3), mais à l'intérieur des deux tubes extérieurs (2, 6).

2. Tube d'aspiration télescopique pour aspirateur, selon la revendication 1, caractérisé en ce que le tube intérieur (3) présente une section transversale ovale présentant une courbure concave dans sa zone (3b) correspondant aux tubes de canalisation de câble (4, 5) et enveloppant partiellement le tube extérieur de canalisation de câble (4) avec cette zone de section transversale courbée.

3. Tube d'aspiration télescopique pour aspirateur, selon les revendications 1 et 2, caractérisé en ce que le tube extérieur de canalisation de câble (4) et le tube intérieur de canalisation de câble (5) sont pourvus d'une section transversale ronde et circulaire.

4. Tube d'aspiration télescopique pour aspirateur, selon l'une ou plusieurs des revendications 1 à 3, caractérisé en ce que le tube extérieur de canalisation de câble (4) est muni sur sa face périphérique extérieure (4a) de deux nervures (4b 4c) diamétralement opposées et parallèles à son axe de symétrie longitudinal (4d), qui prennent appui sur deux faces de glissement (16, 17) situées aux extrémités de la zone de la section transversale (3b) à courbure concave du tube intérieur (3) et qui forment avec celles-ci un palier lisse (4b, 4c; 16, 17).

5. Tube d'aspiration télescopique pour aspirateur selon l'une ou plusieurs des revendications 1 à 4, caractérisé en ce que le tube extérieur de canalisation de câble (4) est muni d'autres nervures de renforcement (18, 18a) parallèles à son axe de symétrie longitudinal (4d).

6. Tube d'aspiration télescopique pour aspirateur selon l'une ou plusieurs des revendications 1 à 5, caractérisé en ce que le tube intérieur de canalisation de câble (5) est guidé avec un ajustement glissant souple dans le tube extérieur de canalisation de câble (4).

7. Tube d'aspiration télescopique pour aspirateur selon l'une ou plusieurs des revendications 1 à 6, caractérisé en ce que le tube intérieur (3) et le tube intérieur de canalisation de câble (5) sont raccordés au tube extérieur (6), à l'extrémité (6a) de celui-ci (6), par l'intermédiaire d'un premier élément de raccordement (13), de manière à résister à la torsion et à être relativement immobiles.

8. Tube d'aspiration télescopique pour aspirateur selon l'une ou plusieurs des revendications 1 à 7, caractérisé en ce qu'une prise de courant embrochable (11) pour le câble conducteur d'électricité (10) est prévue sur le premier élément de raccordement.

9. Tube d'aspiration télescopique pour aspirateur selon l'une ou plusieurs des revendications 1 à 8, caractérisé en ce que le premier tube extérieur (2) est raccordé à son extrémité (2a) au tube de canalisation de câble (4), par l'intermédiaire d'un second élément de raccordement (14), de manière à résister à la torsion et à être relativement immobiles l'un par rapport à l'autre.

10. Tube d'aspiration télescopique pour aspirateur selon l'une ou plusieurs des revendications 1 à 9, caractérisé en ce qu'une prise de courant embrochable (12) pour le câble conducteur d'électricité (10) est prévue sur le second élément de raccordement (14).

11. Tube d'aspiration télescopique pour aspirateur selon l'une ou plusieurs des revendications 1 à 10, caractérisé en ce que le tube intérieur (3), les deux tubes de canalisation de câble (4, 5) et les éléments de raccordement (13, 14) sont faits en matière plastique, tandis que le premier et le second tube extérieur (2, 6) sont en métal.

12. Tube d'aspiration télescopique pour aspirateur selon l'une ou plusieurs des revendications 1 à 11, caractérisé en ce que des creux d'enclenchement (8) destinés au dispositif de verrouillage (7) placé dans le second tube extérieur (6) sont disposés sur la face périphérique extérieure du premier tube extérieur (2).

13. Tube d'aspiration télescopique pour aspirateur selon l'une ou plusieurs des revendications 1 à 12, caractérisé en ce qu'un anneau d'étanchéité (19) en matière plastique est mis en place à l'extrémité libre (2b) du premier tube extérieur (2), sur sa face périphérique extérieure (2c), et en ce qu'un anneau d'étanchéité (20) en matière plastique est également mis en place à l'extrémité libre (6b) du second tube extérieur (6), sur sa face périphérique intérieure (6c), anneaux qui forment des paliers lisses et des distanceurs entre la face périphérique extérieure (2c) du premier tube extérieur (2) et la face périphérique intérieure (6c) du second tube extérieur (6).

14. Tube d'aspiration télescopique pour aspirateur selon l'une ou plusieurs des revendications 1 à 13, caractérisé en ce que dans le tube intérieur de canalisation de câble et dans le tube extérieur de canalisation de câble (4) se déployant télescopiquement avec ce dernier, entre les deux prises (11, 12) des éléments de raccordement (13, 14), on a prévu comme câble, un câble hélicoïdal expansible (10).

15. Tube d'aspiration télescopique pour aspirateur selon l'une ou plusieurs des revendications 1 à 14, caractérisé en ce que les formes des sections transversales des deux tubes extérieurs (2, 6) et en partie du tube intérieur (3) en combinaison avec le tube extérieur de canalisation de câble (4) sont géométriquement semblables.
